# EUROPEAN PATENT APPLICATION

(11) **EP 1 333 389 A2**
(43) Date of publication of application: **06.08.2003**
(21) Application number: 02102528.3
(22) Date of filing: 04.11.2002
(51) Int. Cl.: G06F 17/30

(54) **Directory server software architecture**

(30) Priority: 02.11.2001 US 4349
(71) Applicant: Sun Microsystems, Inc., Santa Clara, California 95054 (US)
(72) Inventor: Wahl, Mark F., 78737, Austin (US); Merrells, John, 94041, Mountain View (US); Smith, Mark C., Saline, MI 48176-1519 (US)
(74) Representative: Weihs, Bruno

(57) **Abstract**

A directory server system includes a front-end portion adapted to connect to a client computer, a back-end portion with an embedded database, and a mapping tree portion. The front-end portion includes a core protocol connection responder configured to access information stored in the back-end portion, wherein the back-end portion is maintained in a logical representation by a directory information tree. The mapping tree portion identifies a location of information stored in the back-end portion in response to a request sent by the client computer.

## Description

### Background of Invention

The most fundamental program resident on any computer is the operating system (OS). Various operating systems exist in the market place, including Solaris™ from Sun Microsystems Inc., Palo Alto, CA (Sun Microsystems), MacOS from Apple Computer, Inc., Cupertino, CA, Windows® 95/98 and Windows NT®, from Microsoft Corporation, Redmond, WA, UNIX, and Linux. The combination of an OS and its underlying hardware is referred to herein as a "traditional platform". Prior to the popularity of the Internet, software developers wrote programs specifically designed for individual traditional platforms with a single set of system calls and, later, application program interfaces (APIs). Thus, a program written for one platform could not be run on another. However, the advent of the Internet made cross-platform compatibility a necessity and a broader definition of a platform has emerged. Today, the original definition of a traditional platform (OS/hardware) dwells at the lower layers of what is commonly termed a "stack," referring to the successive layers of software required to operate in the environment presented by the Internet and World Wide Web.

Effective programming at the application level requires the platform concept to be extended all the way up the stack, including all the new elements introduced by the Internet. Such an extension allows application programmers to operate in a stable, consistent environment.

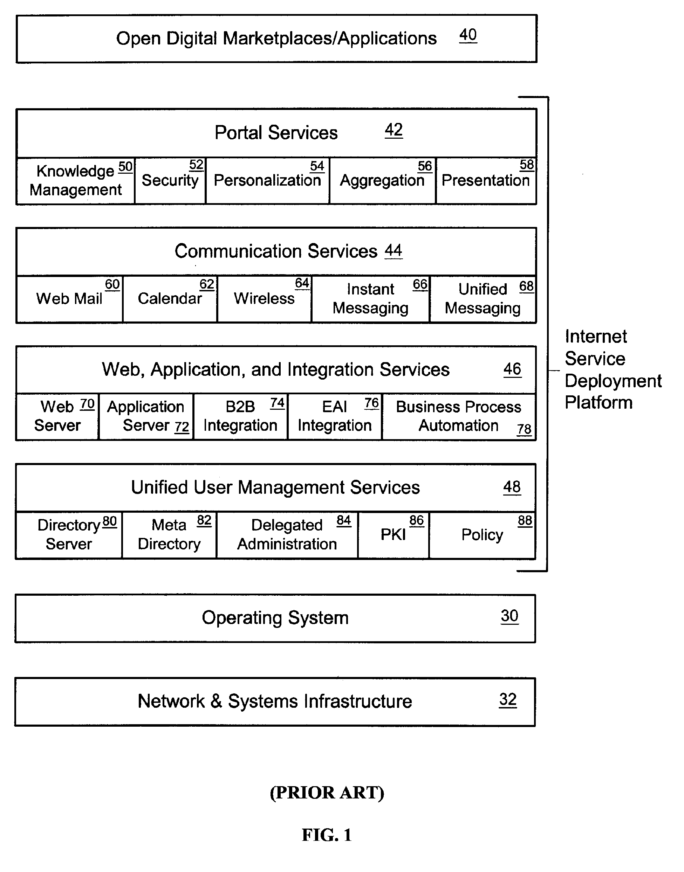

iPlanet™ E-commerce Solutions, a Sun Microsystems|Netscape Alliance, has developed a net-enabling platform shown in Figure 1 called the Internet Service Deployment Platform (ISDP) (28). ISDP (28) gives businesses a very broad, evolving, and standards-based foundation upon which to build an e-enabled solution.

A core component of the ISDP (28) is iPlanet™ Directory Server (80), a Lightweight Directory Access Protocol (LDAP)-based solution that can handle more than 5,000 queries per second. iPlanet™ Directory Server (iDS) provides a centralized directory service for an intranet or extranet while integrating with existing systems. The term "directory service" refers to a collection of software, hardware, and processes that store information and make the information available to users. The directory service generally includes at least one instance of the iDS and one or more directory client program(s). Client programs can access names, phone numbers, addresses, and other data stored in the directory.

The iDS is a general-purpose directory that stores all information in a single, network-accessible repository. The iDS provides a standard protocol and application programming interface (API) to access the information contained by the iDS. The iDS provides global directory services, meaning that information is provided to a wide variety of applications. Until recently, many applications came bundled with a proprietary database. While a proprietary database can be convenient if only one application is used, multiple databases become an administrative burden if the databases manage the same information. For example, in a network that supports three different proprietary e-mail systems where each system has a proprietary directory service, if a user changes passwords in one directory, the changes are not automatically replicated in the other directories. Managing multiple instances of the same information results in increased hardware and personnel costs.

The global directory service provides a single, centralized repository of directory information that any application can access. However, giving a wide variety of applications access to the directory requires a network-based means of communicating between the numerous applications and the single directory. The iDS uses LDAP to give applications access to the global directory service.

LDAP is the Internet standard for directory lookups, just as the Simple Mail Transfer Protocol (SMTP) is the Internet standard for delivering e-mail and the Hypertext Transfer Protocol (HTTP) is the Internet standard for delivering documents. Technically, LDAP is defined as an on-the-wire bit protocol (similar to HTTP) that runs over Transmission Control Protocol/Internet Protocol (TCP/IP). LDAP creates a standard way for applications to request and manage directory information.

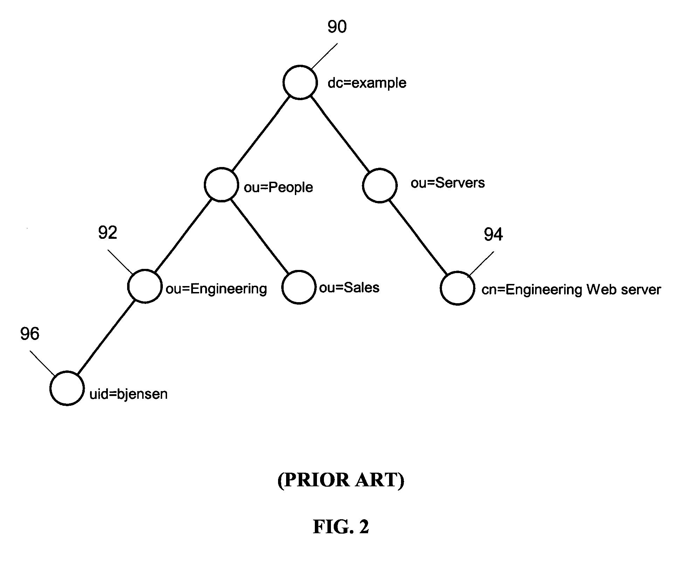

An LDAP-compliant directory, such as the iDS, leverages a single, master directory that owns all user, group, and access control information. The directory is hierarchical, not relational, and is optimized for reading, reliability, and scalability. This directory becomes the specialized, central repository that contains information about objects and provides user, group, and access control information to all applications on the network. For example, the directory can be used to provide information technology managers with a list of all the hardware and software assets in a widely spanning enterprise. Most importantly, a directory server provides resources that all applications can use, and aids in the integration of these applications that have previously functioned as stand-alone systems. Instead of creating an account for each user in each system the user needs to access, a single directory entry is created for the user in the LDAP directory. Figure 2 shows a portion of a typical directory with different entries corresponding to real-world objects. The directory depicts an organization entry (90) with the attribute type of domain component (dc), an organizational unit entry (92) with the attribute type of organizational unit (ou), a server application entry (94) with the attribute type of common name (cn), and a person entry (96) with the attribute type of user ID (uid). All entries are connected by the directory.

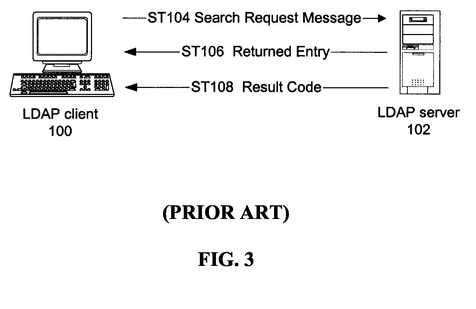

Understanding how LDAP works starts with a discussion of an LDAP protocol. The LDAP protocol is a message-oriented protocol. The client constructs an LDAP message containing a request and sends the message to the server. The server processes the request and sends a result, or results, back to the client as a series of LDAP messages. Referring to Figure 3, when an LDAP client (100) searches the directory for a specific entry, the client (100) constructs an LDAP search request message and sends the message to the LDAP server (102) (step 104). The LDAP server (102) retrieves the entry from the database and sends the entry to the client (100) in an LDAP message (step 106). A result code is also returned to the client (100) in a separate LDAP message (step 108).

LDAP-compliant directory servers like the iDS have nine basic protocol operations, which can be divided into three categories. The first category is interrogation operations, which include search and compare operators. These interrogation operations allow questions to be asked of the directory. The LDAP search operation is used to search the directory for entries and retrieve individual directory entries. No separate LDAP read operation exists. The second category is update operations, which include add, delete, modify, and modify distinguished name (DN), *i.e.*, rename, operators. A DN is a unique, unambiguous name of an entry in LDAP. These update operations allow the update of information in the directory. The third category is authentication and control operations, which include bind, unbind, and abandon operators.

The bind operator allows a client to identify itself to the directory by providing an identity and authentication credentials. The DN and a set of credentials are sent by the client to the directory. The server checks whether the credentials are correct for the given DN and, if the credentials are correct, notes that the client is authenticated as long as the connection remains open or until the client re-authenticates. The unbind operation allows a client to terminate a session. When the client issues an unbind operation, the server discards any authentication information associated with the client connection, terminates any outstanding LDAP operations, and disconnects from the client, thus closing the TCP connection. The abandon operation allows a client to indicate that the result of an operation previously submitted is no longer of interest. Upon receiving an abandon request, the server terminates processing of the operation that corresponds to the message ID.

In addition to the three main groups of operations, the LDAP protocol defines a framework for adding new operations to the protocol via LDAP extended operations. Extended operations allow the protocol to be extended in an orderly manner to meet new marketplace needs as they emerge.

### Summary of Invention

In general, in one aspect, the invention relates to a directory server system. The directory server system comprises a front-end portion connectable to a client computer, a back-end portion with an embedded database, and a mapping tree portion. The front-end portion comprises a core protocol connection responder configured to access information stored in the back-end portion maintained in a logical representation by a directory information tree. The mapping tree portion identifies a location of information stored in the back-end portion in response to a request sent by the client computer.

In general, in one aspect, the invention relates to a directory server system. The system comprises a front-end portion adapted to connect to a client computer, a back-end portion with an embedded database, a mapping tree portion, a graphical user interface backed by an administrative server configured to manager the directory server system, a gateway allowing access and querying of the back-end portion from a web browser, a plurality of database command line tools to manipulate the front-end portion and the back-end portion, and a network management protocol monitor . The front-end portion comprises a core protocol connection responder configured to access information stored in the back-end portion maintained in a logical representation by a directory information tree. The mapping tree portion identifies a location of information stored in the back-end portion in response to a request sent by the client computer.

In general, in one aspect, the invention relates to a computer system to manage a directory server. The computer system comprises a processor, a memory, and software instructions stored in the memory for enabling the computer system under control of the processor. The software instructions perform sending a Lightweight Directory Access Protocol request from the client computer to a front-end portion, processing the Lightweight Directory Access Protocol request to create a front-end call, sending the front-end call to a back-end portion, processing the front-end call using a default database function to produce a result. The default database function comprises a mapping tree portion to identify a location of information stored in the back-end portion in response to a request sent by the client computer. The result are passed to the front-end portion and the result is sent from the front-end portion to the client computer.

In general, in one aspect, the invention relates to a method of processing a request from a client computer using a directory server. The method comprises sending a Lightweight Directory Access Protocol request from the client computer to a front-end portion, processing the Lightweight Directory Access Protocol request to create a front-end call, sending the front-end call to a back-end portion, processing the front-end call using a default database function to produce a result. The default database function comprises a mapping tree portion to identify a location of information stored in the back-end portion in response to a request sent by the client computer. The result is passed to the front-end portion and the result is sent from the front-end portion to the client computer.

In general, in one aspect, the invention relates to a method of processing a Lightweight Directory Access Protocol request from a client computer using a directory server. The method comprises sending a Lightweight Directory Access Protocol request from the client computer to a front-end portion, processing the Lightweight Directory Access Protocol request to create a front-end call, sending the front-end call to a back-end portion, processing the front-end call using a default database function to produce a result wherein the default database function comprises mapping a tree portion to identify a location of information stored in the back-end portion in response to the Lightweight Directory Access Protocol request sent by the client computer, passing the result to a front-end portion, and sending the result from the front-end portion to the client computer.

In general, in one aspect, the invention relates to a method of processing a Lightweight Directory Access Protocol request from a client computer using a directory server. The method comprises sending a Lightweight Directory Access Protocol request from the client computer to a front-end portion, processing the Lightweight Directory Access Protocol request to create a front-end call, sending the front-end call to a back-end portion, processing the front-end call using a default database function to produce a result. The default database function comprises a mapping tree portion to identify a location of information stored in the back-end portion in response to the Lightweight Directory Access Protocol request sent by the client computer. The result is passed to the front-end portion. The result is sent from the front-end portion to the client computer. Communication is managed by the front-end portion between server-side software and a directory client program stored on the client computer. The directory server is managed using a console with a graphical user interface backed by an administrative server. The back-end portion is accessed and queried from a web browser with a gateway. The front-end portion and the back-end portion are manipulated with a plurality of database command line tools. Activity is reported to a network console workstation by a network management protocol monitor.

In general, in one aspect, the invention relates to an apparatus processing a Lightweight Directory Access Protocol request from a client computer using a directory server. The apparatus comprises means for sending a Lightweight Directory Access Protocol request from the client computer to a front-end portion, means for processing the Lightweight Directory Access Protocol request to create a front-end call, means for sending the front-end call to a back-end portion, means for processing the front-end call using a default database function to produce a result, means for passing the result to the front-end portion, and means for sending the result from the front-end portion to the client computer. The default database function comprises a mapping tree portion to identify a location of information stored in the back-end portion in response to the Lightweight Directory Access Protocol request sent by the client computer.

Other aspects and advantages of the invention will be apparent from the following description and the appended claims.

### Brief Description of Drawings

Figure 1 illustrates a block diagram of iPlanet™ Internet Service Development Platform.

Figure 2 illustrates part of a typical directory.

Figure 3 illustrates the LDAP protocol used for a simple request.

Figure 4 illustrates a typical computer with components.

Figure 5 illustrates a default directory tree for iPlanet™ Directory Server in one embodiment of the present invention.

Figure 6 illustrates block diagram of iPlanet™ Directory Server in one embodiment of the present invention.

Figure 7 illustrates a chaining method of iPlanet™ Directory Server in one embodiment of the present invention.

Figure 8 illustrates a networked system including of iPlanet™ Directory Server in one embodiment of the present invention.

### Detailed Description

Specific embodiments of the invention will now be described in detail with reference to the accompanying figures. Like elements in the various figures are denoted by like reference numerals for consistency.

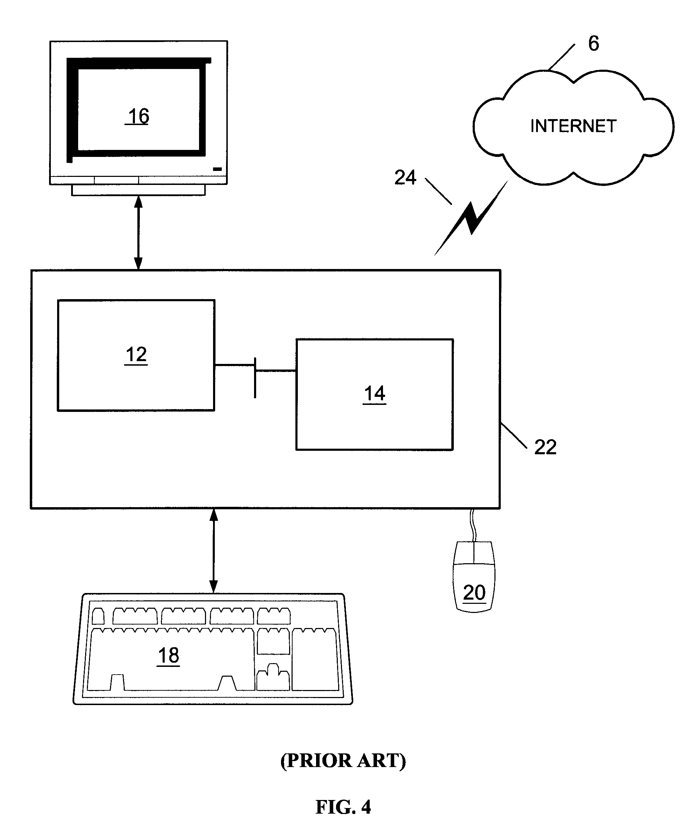

The invention described here may be implemented on virtually any type of computer regardless of the traditional platform being used. For example, as shown in Figure 4, a typical computer (130) has a processor (132), memory (134), among others. The computer (130) has associated therewith input means such as a keyboard (136) and a mouse (138), although in an accessible environment these input means may take other forms. The computer (130) is also associated with an output device such as a display (140), which also may take a different form in a given accessible environment. The computer (130) is connected via a connection means (142) to a wide area network (144), such as the Internet.

Application directories store user information, such as employee, partner, vendor, and customer information, in a single repository for access by multiple applications across multiple heterogeneous systems for up to millions of users. Application directories provide storage for user information, user authentication and access control, and provide the foundation for security for many Internet applications. The primary purpose of an application directory is to support Intranet and E-commerce applications. Application directories serve this role by having such features as Meta-directory capabilities, high-performance, scalability and reliability.

iPlanet™ Directory Server (iDS) is an application directory and delivers user-management infrastructure for managing large volumes of user information for e-business applications and services. The iDS is a high performance, scalable LDAP Server with an on-disk database. The iDS is able to function on a variety of platforms, including Windows® NT, Windows® 2000 and a wide range of UNIX compliant platforms.

Generally, the iDS contains the three basic components, including a front-end portion responsible for network connections, a plurality of backend plug-ins portion for database management, and a basic directory tree portion containing server-related data.

The front-end of the iDS manages communications between the server-side software that implements the LDAP protocol and directory client programs. The iDS functions as a daemon on UNIX systems and as a service on Microsoft® Windows systems. Multiple client programs can speak to the server in LDAP. The iDS and client can communicate using LDAP over both TCP/IP and Secure Sockets Layer (SSL)/TCP/IP, depending on whether the client negotiates use of Transport Layer Security (TLS) for the connection.

When communication takes place with TLS, the communication is usually encrypted. TLS can be used in conjunction with secured DNS to provide confirmation to client applications that the communications are binding to the correct server. TLS and predecessor SSL are used throughout the iDS products to perform other security activities such as message integrity checks, digital signatures, and mutual authentication between servers.

Multiple clients can bind to the server at the same time over the same network because the iDS is a multi-threaded application. As directory services grow to include larger numbers of entries or larger numbers of clients spread out geographically, the directory services can also include multiple iDS placed in locations throughout the network.

The iDS relies on plug-ins. A plug-in is a way to add functionality to a core directory server. Plug-ins have a state, meaning that they can be present but disabled. Any of the plug-ins provided with the iDS can be enabled depending upon the functionality desired for the server. Custom plug-ins and LDAP client programs may be written using the LDAP client software development kit (SDK) included with the iDS to customize a particular deployment of the iDS.

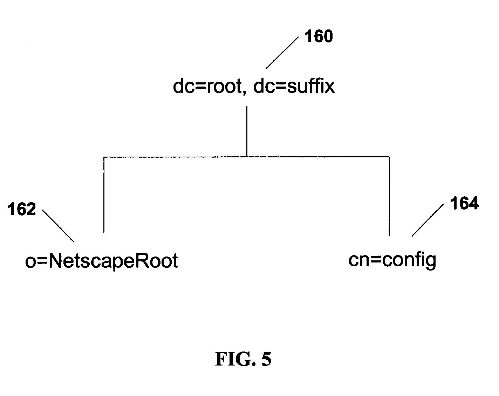

A basic directory tree, also known as directory information tree (DIT), mirrors a tree model used by most file systems, with a tree root, or first entry, appearing at the top of a hierarchy. At installation, the iDS creates a default directory tree as show in Figure 5. The default directory tree contains a root (160) (dc=root, dc=suffix) and two entries. A first entry is o=NetscapeRoot (162). The data contained by this subtree is used by the iPlanet™ Administration Server. The iPlanet™ Administration Server handles authentication, and all actions that cannot be performed through LDAP (such as starting or stopping). A second entry is cn=config (164). This subtree contains iDS configuration information.

The initial directory tree contains one subtree reserved for the server itself and one subtree for iPlanet™ Administration Server. All the iDS typically contain the cn=config data, but only one (the first server installed) contains the o=NetscapeRoot information. The default directory can be built upon to add any data relevant to a directory installation.

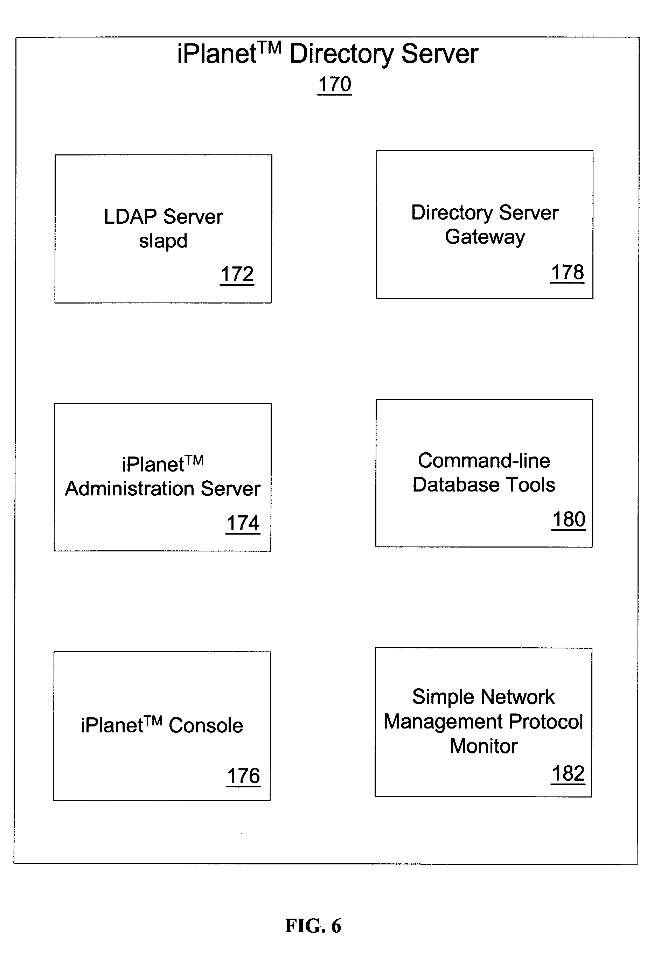

Specifically, the iDS (170) includes six major components as shown in Figure 6. A first component is LDAP server slapd (172). A second component is the iPlanet™ Administration Server (174) followed by a third component, iPlanet™ Console (176) to manage the server. A fourth component is customizable HTTP to LDAP client that allows access to directory data from a web browser, Directory Server Gateway (178). A fifth component is command-line database tools (180) to allow scripting updates and other modifications to the iDS and the contents of the iDS. A sixth component permits monitoring the iDS in real time using a Simple Network Management Protocol (SNMP) monitor (182).

The slapd component is a LDAP Directory Server daemon (on a UNIX machine) or service (on a Microsoft Windows machine) that is responsible for most functions of the directory server except replication. The LDAP server slapd is written primarily in C programming language and is implemented as a core LDAP connection responder, with a plug-in interface for performing the work of each LDAP operation. The main parts of the LDAP server slapd are connection handling, security functions of authentication and access control, mapping tree (distribution), Lightweight Directory Back-end Method (LDBM) database, replication, chaining, referential integrity, password hashing, roles, class of service, changelog, syntax, schema, DSA-specific Entry (DSE) (DSA is an X.500 term for the directory server), and tasks.

A connection handling part of the slapd component involves slapd maintaining a thread pool and assigning threads for incoming operation because LDAP is an asynchronous request-response protocol. The slapd is a responder on the TCP ports for LDAP and LDAP over SSL. A proprietary protocol, such as NSPR, is used for connection handling between slapd and the socket (on UNIX) library.

Authentication is a process of proving the identity of a client user to the iDS. The iDS uses the same authentication mechanism for all users, whether people or LDAP-aware applications. The iDS provides several forms of authentication, including anonymous user, simple password, encrypted password, certificate-based, simple password over TLS, and proxy authorization. In one or more embodiments of the invention, the default form is simple password where a user provides a bind DN and a corresponding password in order to be granted access to the iDS.

To handle the security issue of protecting the integrity of the information passed among servers and client applications, the slapd supports LDAP protocol over the SSL and TLS. SSL is a software library establishing a secure connection between two parties (client and server) used to implement HTTPS, the secure version of HTTP. SSL can be used in conjunction with the RC2 and RC4 encryption algorithms from RSA (short for Rivest-Shamir-Adleman encryption). The encryption method selected for a particular connection is the result of a negotiation between the client application and the iDS. SSL can also be used in conjunction with CRAM-MD5, which is a hashing mechanism that guarantees that information has not been modified during transmission. The iDS can have SSL-secured connections and non-SSL connections simultaneously. Also available is an optional client certificate-based authentication, using Name Service Switch (NSS).

Once authenticated, slapd uses access control lists (ACL) maintained in the iDS to determine access control. Access control allows specified clients to have access to particular information, while other clients do not have access, *e.g.* parts of the DIT that may be retrieved or modified. The iDS allows the user to perform functions or access files and directories based on the permissions granted to that user by a directory administrator. The ACL contains a series of one or more access control information (ACI) statements that either allow or deny permissions (e.g., read, write, and search) and compare to specified entries and the attributes. Using the ACL, permissions can be set for the entire directory, a particular subtree of the directory, a specific entry in the directory, a specific set of entry attributes, or any entry that matches a given LDAP search filter. In addition, permissions may be set for a specific user, all users belonging to a specific group, or for all users of the directory. Lastly, access can be defined for a network location, e.g., an IP address or a DNS name.

An LDAP data model specifies that each server supports one or more naming contexts, each a contiguous tree of entries. A mapping tree function is used to route incoming LDAP operations to either a local database or a remote server that holds the entries in the scope of a client query.

An LDBM database is a high-performance disk-based database including a set of large files that contain all of the data assigned to the database. The LDBM database is the basic unit of storage, performance, replication, and indexing. Operations like importing, exporting, backing up, restoring, and indexing may be performed on the database. The LDBM database may be maintained using a database where each naming context held locally is implemented as a set of btree database files and logs, *e.g.* Sleepycat. In one or more embodiments of the invention, the LDBM plug-in is automatically installed with the iDS and is enabled by default. By default, the iDS uses a single database to store the directory tree. This database can manage millions of entries. The default database supports advanced methods of backing up and restoring the data, so that the data is not at risk. In one embodiment, multiple databases may be chosen to support iDS. The data may be distributed across the databases, allowing the server to hold more data than can be stored on a single database.

Replication is an act of copying directory trees or subtrees from supplier servers to consumer servers. A server that holds a replica that is copied to a replica on a different server is called a supplier for that replica. A server that holds a replica that is copied from a different server is called a consumer for the replica. Generally, the replica on the supplier server is a read-write replica, and the one on the consumer server is read-only replica. The iDS that holds the master copy of the information, automatically copies any updates to all replicas. Replication enables highly available directory services, and to geographically distribute data. In practical terms, replication brings fault tolerance/failover, load balancing, higher performance/reduced communication costs, and local data management.

Common replication scenarios include single-mastered replication, multi-mastered replication, cascading replication, and mixed environments. The default is multi-master replication in accordance with one or more embodiments of the invention. In a multi-master replication environment, the same information can be mastered on two servers. Data can be updated simultaneously in two different locations. The changes that occur on each server are replicated to the other. Each server plays both roles of supplier and consumer. When the same data is modified on both servers, there is a conflict resolution procedure to determine which change is kept. IDS considers the valid change to be the most recent one. For each naming context, the slapd supports multi-master replication between two writable master servers and any number of read-only servers. The approach is based on the weak consistency and eventual synchronization models, and contains conflict resolution to automatically reconcile already acknowledged operations. In one embodiment, the slapd also supports limited replication with prior versions of iDS.

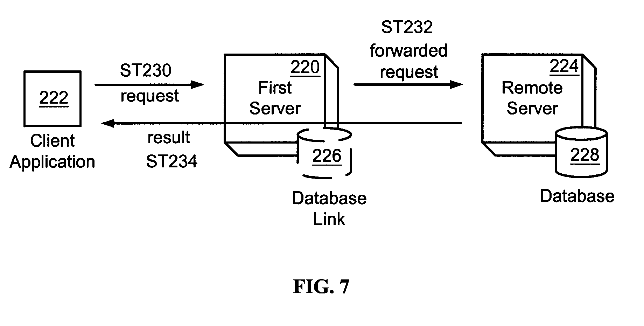

Chaining is a method for relaying requests to another server. This method is implemented through a database link. The database link contains no data. Instead, the link redirects client application requests to remote servers that contain the required. Referring to Figure 7, this method is implemented through a database link (226). The database link (226) contains no data. Instead, the link (226) redirects client application requests to remote servers that contain the required data. During chaining, a first server (220) receives a request (step 230) from a client application (222) for data not contained by the application (222). The first server then contacts a remote server (224) on behalf of the client application (222) (step 232) and returns the results to the client application (222) (step 234). Each database link (226) is associated to the remote server (224) holding data in a database (228). However, alternate remote servers can be configured to contain data replicas for the database link for use during a failover event, e.g., an overloaded or failed resource, such as a server is relocated to the alternate remote servers with little or no disruption to the users.

Chaining is implemented in the iDS as a plug-in. The plug-in is enabled by default in accordance with one or more embodiments of the invention. Chaining of LDAP requests to other servers is supported by the slapd, as well as returning referrals. The referral is a piece of information returned by a server that tells a client which server to contact to fulfill a specific request. The slapd also supports pass-through authentication, where one directory server consults another to check bind credentials.

Referential integrity is a plug-in mechanism to the slapd that can be enabled to enforce, in a single, master naming context, referential integrity of DN-valued attributes. Referential integrity ensures that relationships between related entries are maintained within the directory. The referential integrity plug-in can be used in a multi-master replication scenario, provided that the plug-in is enabled on just one master in the multi-master set. This ensures that referential integrity updates are made on just one the master servers, and propagated to the other.

Password hashing is a part of the slapd that can be configured to automatically hash incoming user password attribute values, and to compare these hashed passwords in the Bind operation.

Class of Service allows sharing of attributes between entries in a way that is transparent to applications. With Class of Service, some attribute values may not be stored with the entry. Instead, the attribute values are generated by Class of Service logic as the entry is sent to the client application. For example, a typical directory contains thousands of entries that all share the common attribute faxTelephoneNumber. Traditionally, in order to change the fax number, each entry is updated individually resulting in a large administrative task that runs the risk of inaccuracies. With Class of Service, the attribute is generated dynamically. The attribute is stored in one place, and for each entry a pointer points to the storage place to give a value to the fax number attribute. For the application, these attributes appear just like all other attributes despite not being stored on the entries.

Roles are an entry grouping mechanism where each role has members, which are the entries that possess the role. Roles unify the static and dynamic group concept supported by previous versions of Directory Server. Static groups allowed creation of a group entry that contains a list of members. Dynamic groups allowed filtering of entries that contain a particular attribute and include them in a single group.

Each entry assigned to a role contains a nsRole attribute, a computed attribute that specifies all of the roles that belongs to an entry. A client application checks role membership by searching the nsRole attribute, which is computed by the directory and therefore always up-to-date. Roles are used to improve the administration of large groups. Roles are designed to be more efficient and easier to use for applications. For example, applications can locate the roles of an entry in one step, rather that select a group and then browse the members list (taking two steps).

A cn=changelog subtree is provided for the meta-directory, and for backwards compatibility with previously used Directory Server products, e.g., Netscape and Innosoft servers.

The slapd supports a set of basic LDAP syntaxes and matching rules. The slapd can also import any schema (represented by a set of LDAP Data Interchange Format (LDIF) files) which uses these syntaxes. LDIF is a standard text-based format for describing directory entries. LDIF is line delimited, colon separated attribute value pairs. An entry is a group of lines in the LDIF file that contains information about an object, such as a person in an organization or a printer on a network. Information about the entry is represented in the LDIF file by a set of attributes and the values. Each entry has an object class attribute that specifies the kind of object the entry describes and defines the set of additional attributes the entry contains. Each attribute describes a particular trait of an entry.

The schema maintains the integrity of the data stored in a directory by imposing constraints on size, range, and format of data values. The schema is a plurality of definitions describing what types of information can be stored as entries in the directory. When information that does not match the schema is stored in the directory, clients attempting to access the directory may be unable to display the proper results. The schema may be extended with new object classes and attributes to accommodate the unique requirements of the directory.

The slapd configuration is stored in an LDIF file dse.ldif, which is available to authorized users to view and manipulate over LDAP. The slapd also provides well know DSEs, including a root DSE, cn=monitor and cn=schema.

A tasks tree can be used by a directory manager to request and monitor long-running operations, such as database import, export, backup, restore and re-index.

The iPlanet™ Console is a Java-based application that allows administrative management of iDS from a graphical user interface. All administration of the iDS can be done through the iPlanet™ Console, backed by the iPlanet™ Administration Server. An example is a user logging in from any system connected to a network and managing a remote server or making changes to a centralized directory.

The Directory Server gateway (DSGW) component is a collection of Computer Graphics Interface (CGI) forms that allows a browser to perform LDAP functions, such as querying and accessing the iDS from a web browser.

The command -line database tools component includes a variety of command line tools. Tools included are a slapd stop and a slapd restart, a database backup and recovery, a database reindex, a database load and export to LDIF, an account inactivate and deactivate, an LDIF merge, and a check kernel tuning.

Simple Network Management Protocol (SNMP) is a network management protocol of TCP/IP. In SNMP, agents, which can be hardware as well as software, monitor the activity in the various devices on the network and report to a network console workstation. The SNMP Monitor component of iDS is software that exchanges information between the various SNMP subagents and the Network Management Station. The SNMP subagent is software that gathers information about a managed device and passes the information to the SNMP Monitor.

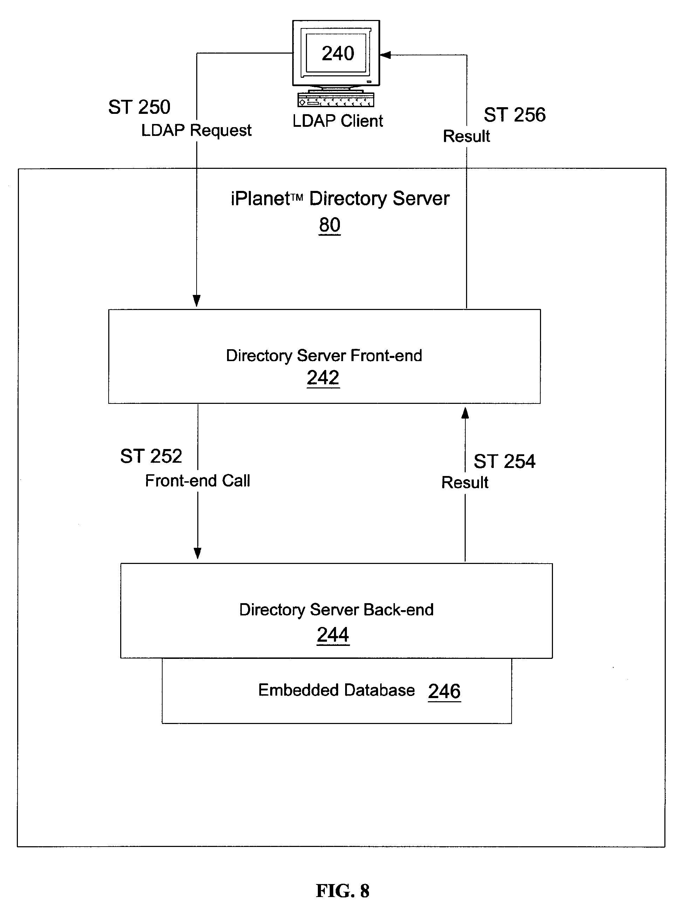

Referring to Figure 8, in accordance with one or more embodiments of the present invention, the iDS may be included in a networked system. In such a system, the iDS communicates with an LDAP Client (240) through a network connection (not shown). An LDAP request is sent from the LDAP Client (240) to the Directory Server Front-end (242) (ST 250). The Directory Server Front-end (242) interprets the request and forwards a front-end call to a Directory Server Back-end (244) (ST 252). The Directory Server Back-end (244) accessing an embedded database (246) executes the front-end call and returns a result to the Directory Server Front-end (242) (ST 254). The result is then passed through the Directory Server Front-end (242) and returned to the LDAP Client (240) (ST 256).

Advantages of the present invention may include one or more of the following. The iDS is modular and flexible by using a plug-in methodology. Changing one feature of the iDS does not affect other features and features may be disabled without affecting other features. The iDS is a high performance, scalable LDAP Server with an on-disk database. The iDS is able to function on a variety of platforms, including Windows® NT, Windows® 2000 and a wide range of UNIX compliant platforms. Those skilled in the art will appreciate that the present invention may have further advantages.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A directory server system, comprising:
a front-end portion adapted to connect to a client computer;
a back-end portion with an embedded database; and
a mapping tree portion;
wherein the front-end portion comprises a core protocol connection responder configured to access information stored in the back-end portion, wherein the back-end portion is maintained in a logical representation by a directory information tree;
wherein the mapping tree portion identifies a location of information stored in the back-end portion in response to a request sent by the client computer.

2. The system of claim 1, further comprising:
a graphical user interface backed by an administrative server configured to manage the directory server system.

3. The system of claim 1, further comprising:
a gateway allowing access and querying of the back-end portion from a web browser.

4. The system of claim 1, further comprising:
a plurality of database command line tools to manipulate the front-end portion and the back-end portion.

5. The system of claim 1, further comprising:
a network management protocol monitor.

6. The system of claim 1, wherein the front-end portion manages communication between server-side software and a directory client program stored on the client computer.

7. The system of claim 1, wherein the front-end portion functions as a daemon.

8. The system of claim 1, wherein the front-end portion functions as a service.

9. The system of claim 1, wherein the back-end portion comprises a plurality of back-end plug-ins for database management.

10. The system of claim 1, wherein the client computer is adapted to connect to the front-end portion using an encrypted connection.

11. The system of claim 9, wherein the plurality of back-end plug-ins allow a directory administrator to manage and manipulate the information stored in the embedded database.

12. A directory server system, comprising:
a front-end portion adapted to connect to a client computer;
a back-end portion with an embedded database;
a mapping tree portion;
a graphical user interface backed by an administrative server configured to manage the directory server system;
a gateway allowing access and querying of the back-end portion from a web browser;
a plurality of database command line tools to manipulate the front-end portion and the back-end portion; and
a network management protocol monitor;
wherein the front-end portion comprises a core protocol connection responder configured to access information stored in the back-end portion, wherein the back-end portion is maintained in a logical representation by a directory information tree;
wherein the mapping tree portion identifies a location of information stored in the back-end portion in response to a request sent by the client computer.

13. A computer system to manage a directory server, comprising:
a processor;
a memory; and
software instructions stored in the memory for enabling the computer system under control of the processor, to perform:
receiving a Lightweight Directory Access Protocol request from a client computer to a front-end portion;
processing the Lightweight Directory Access Protocol request to create a front-end call;
sending the front-end call to a back-end portion;
processing the front-end call using a default database function to produce a result, wherein the default database function comprises a mapping tree portion to identify a location of information stored in the back-end portion in response to the Lightweight Directory Access Protocol request sent by the client computer;
passing the result to the front-end portion; and
sending the result from the front-end portion to the client computer.

14. A method of processing a Lightweight Directory Access Protocol request from a client computer using a directory server comprising:
sending a Lightweight Directory Access Protocol request from the client computer to a front-end portion;
processing the Lightweight Directory Access Protocol request to create a front-end call;
sending the front-end call to a back-end portion;
processing the front-end call using a default database function to produce a result,
wherein, the default database function comprises a mapping tree portion to identify a location of information stored in the back-end portion in response to the Lightweight Directory Access Protocol request sent by the client computer;
passing the result to the front-end portion; and
sending the result from the front-end portion to the client computer.

15. The method of claim 14, further comprising:
managing communication by the front-end portion between server-side software and a directory client program stored on the client computer.

16. The method of claim 14, further comprising:
managing the directory server system using a graphical user interface backed by an administrative server.

17. The method of claim 14, further comprising:
accessing and querying the back-end portion from a web browser with a gateway.

18. The method of claim 14, further comprising:
manipulating the front-end portion and the back-end portion with a plurality of database command line tools.

19. The method of claim 14, further comprising:
reporting activity to a network console workstation by a network management protocol monitor.

20. A method of processing a Lightweight Directory Access Protocol request from a client computer using a directory server comprising:
sending a Lightweight Directory Access Protocol request from the client computer to a front-end portion;
processing the Lightweight Directory Access Protocol request to create a front-end call;
sending the front-end call to a back-end portion;
processing the front-end call using a default database function to produce a result,
wherein, the default database function comprises a mapping tree portion to identify a location of information stored in the back-end portion in response to the Lightweight Directory Access Protocol request sent by the client computer;
passing the result to the front-end portion;
sending the result from the front-end portion to the client computer;
managing communication by the front-end portion between server-side software and a directory client program stored on the client computer;
managing the directory server using a graphical user interface backed by an administrative server;
accessing and querying the back-end portion from a web browser with a gateway;
manipulating the front-end portion and the back-end portion with a plurality of database command line tools; and
reporting activity to a network console workstation by a network management protocol monitor.

21. An apparatus for processing a Lightweight Directory Access Protocol request from a client computer using a directory server comprising:
means for sending a Lightweight Directory Access Protocol request from the client computer to a front-end portion;
means for processing the Lightweight Directory Access Protocol request to create a front-end call;
means for sending the front-end call to a back-end portion;
means for processing the front-end call using a default database function to produce a result,
wherein, the default database function comprises a mapping tree portion to identify a location of information stored in the back-end portion in response to the Lightweight Directory Access Protocol request sent by the client computer;
means for passing the result to the front-end portion; and
means for sending the result from the front-end portion to the client computer.
